# FASCICULE DE BREVET EUROPEEN

(11) **EP 1 372 446 B1**
(45) Date de publication et mention de la délivrance du brevet: **30.03.2005**
(21) Numéro de dépôt: 01921448.5
(22) Date de dépôt: 02.04.2001
(51) Int. Cl.: A47J 37/07

(54) **GRIL-PRESS INFRAROUGE PIVOTANT AU GAZ**
SCHWENKBARES INFRAROTGASGRILLGERÄT
PIVOTING INFRARED GAS PRESS-GRILL

(43) Date de publication de la demande: 02.01.2004
(73) Titulaire: Damon, Raymond, 83980 Le Lavandou (FR)
(72) Inventeur: Damon, Raymond, 83980 Le Lavandou (FR)
(74) Mandataire: Marek, Pierre
(86) Numéro de dépôt international: PCT/FR2001/000979
(87) Numéro de publication internationale: WO 2002/078500

(56) Documents cités:
- CH-A- 386 072
- FR-A- 2 727 300
- FR-A- 2 800 257
- LU-A- 40 596
- US-A- 434 466
- US-A- 3 547 097
- US-A- 3 847 536
- US-A- 4 747 392

## Description

L'invention a pour objet la cuisson des viandes, poissons, volailles, etc... sous forme de "grill" avec des émetteurs infrarouges au gaz en partie supérieure horizontale et relevable par pivotement.

On connaît déjà en cuisine particulière des appareils barbecues avec des brûleurs à gaz qui chauffent un lit de roches volcaniques que l'on change après une dizaine de cuissons.

Le barbecue à roche volcaniques n'est pas utilisé par les professionnels car la viande ne peut être "saisie" pour garder toute sa saveur et son arôme.

La température atteinte n'étant pas suffisante pour "saisir" les pièces à rôtir, celles-ci se dessèchent et perdent leurs saveurs et arômes que l'on trouve dans les grillades au feu de bois.

Seuls les rayons infrarouges du gaz permettent d'atteindre ces températures tout en conservant l'hygrométrie car dans le gaz il y a de l'eau, et permettent ainsi de "saisir" les grillades. Le gaz étant issu du bois sans les inconvénients des fumées est autorisé pour éviter les départs d'incendie en particulier dans les régions méditerranéennes.

On connaît également (FR-2.727.300), un appareil de cuisson électrique combiné, principalement constitué, d'une part, par un corps allongé ayant une forme générale à section en U, dont l'une des ailes comporte au moins un générateur de rayonnement infrarouge dirigé vers l'aile opposée, et, d'autre part, par une grille et un bac sous-jacent de récupération des jus de cuisson et des graisses, situés à distance dudit générateur et montés de manière extractible dans le corps.

Cet appareil n'est pas autonome dans la mesure où il est indispensable de l'installer à proximité ou à faible distance d'une source de courant électrique ; l'efficacité de son système de générateur de rayonnement infrarouge peut être perturbée par la formation d'une couche opaque résultant des projections de matières grasses lors d'un processus de cuisson ; le montage rigide du système de chauffage sur l'ossature de l'appareil ne facilite par le retournement des produits en cours de préparation sur la grille de cuisson.

L'objet de l'invention apporte une solution aux problèmes susmentionnés découlant de l'utilisation d'appareils du genre décrit dans le document FR-2.727.300.

Selon l'invention, ce résultat est obtenu grâce à un dispositif de cuisson horizontale avec des émetteurs infrarouges dirigé vers le bas, comportant :
- d'une part, un ensemble 4 comprenant un ou des émetteurs infrarouges 3, fixé sur un cadre en acier inoxydable 20 ; et,
- d'autre part, sur ce même cadre 20, en partie basse, un dispositif comprenant un bac à eau 10 sur lequel est posée la grille 9 destinée à supporter les denrées à griller et permettant de rapprocher ou d'éloigner les grillades suivant leur nature (viande ou poisson) par rapport aux émetteurs infrarouges;
ce dispositif étant remarquable en ce que :
- les émetteurs infrarouges 3 sont des émetteurs au gaz, et
- l'ensemble 4-3 est pivotant sur un axe 19 à l'aide d'une poignée isolée 18, et
- l'ensemble pivotant est équipé d'un écran de protection anti-projection à effet capillaire 7, lequel écran est constitué d'un cadre sur lequel est fixée une toile métallique en acier inoxydable, laquelle est tissée de trous, de préférence de trous carrés de 1 mm x 1 mm, de façon à créer un effet capillaire qui piège les projections de graisses et de sucs et sont détruits immédiatement par pyrolyse.

L'invention est surtout performante du fait que ce grill possède :
1) un ou des émetteurs infrarouges en partie supérieure en position horizontale,
2) un cadre de sécurité et de protection (anti-projection) contre les projections de graisse ou autres sur la céramique des émetteurs infrarouges,
3) qu'il est relevable par pivotement pour permettre le retournement des denrées à rôtir,
4) qu'il est équipé d'un bac à eau pour recevoir les graisses et sucs, de ce fait il n'y a pas de fumée,
5) qu'il est équipé d'une table pour poser les assiettes à servir ou les aliments à rôtir à proximité immédiate, vu la rapidité à laquelle sont exécutées ces grillades.

Les dessins annexés illustrent l'invention :

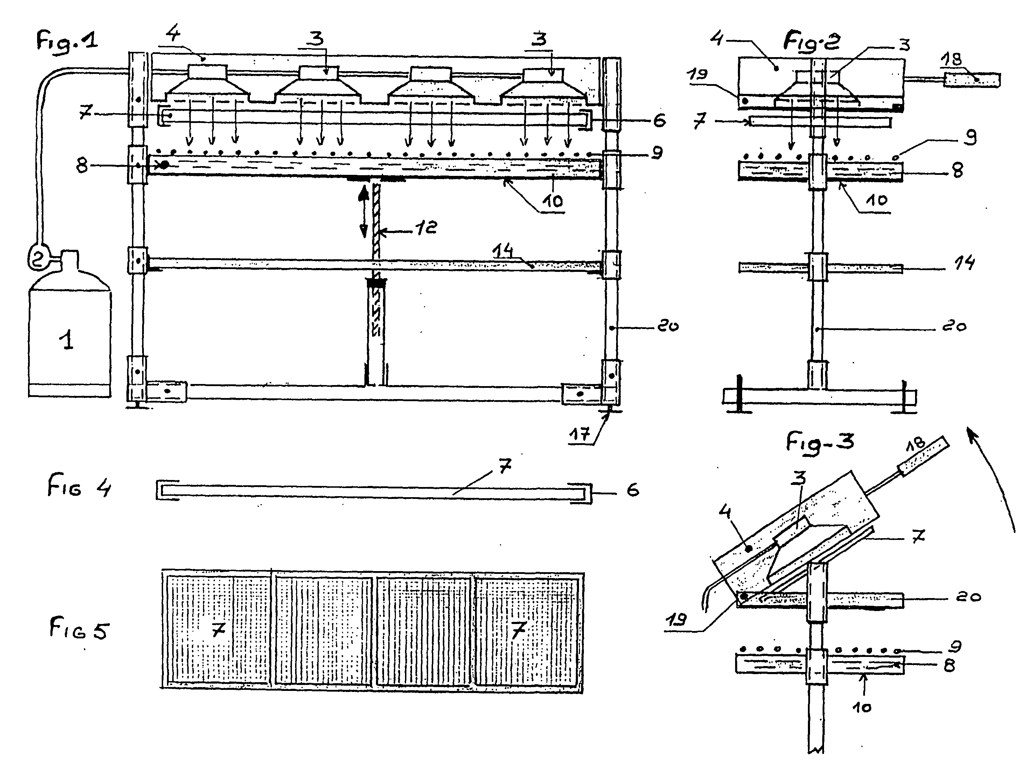

La figure 1 représente de face l'ensemble du dispositif de l'invention en position "cuisson".
La figure 2 représente de côté l'ensemble du dispositif de l'invention en position "cuisson".
La figure 3 représente de côté l'ensemble de l'invention en position "relevée" pour permettre le retournement des grillades.
La figure 4 représente le cadre amovible de protection des céramiques avec ses deux glissières supports.
La figure 5 représente le cadre de protection (anti-projection) des céramiques avec sa toile à effet capillaire.

En référence à ces dessins, le dispositif comporte une bouteille de gaz 1 ou arrivée de gaz naturel alimentant par un détendeur 2 des émetteurs infrarouges 3 disposés horizontalement et diffusant vers le bas ces rayons qui traversent la toile de protection 7 à effet capillaire.

Les grillades sont disposées sur une grille 9 qui repose sur un bac 10 rempli d'eau 8, l'ensemble rapproché ou éloigné des rayons infrarouges produits par les émetteurs 3 à l'aide d'un vérin 12. Une table 14 permet d'avoir à proximité immédiate les assiettes des convives ou les grillades à préparer.

Cet ensemble est posé sur quatre pieds réglables 17 pour avoir une position horizontale réglée au niveau pour le bac à eau 10.

Ce bac à eau 10 rempli d'eau 8 et supportant les grilles 9 reçoit les graisses et sucs qui sont refroidis ; en conséquence, pas de fumée et cuisson sans matière grasse, d'où une cuisson diététique des aliments.

L'ensemble est entièrement démontable pour être rangé dans une caisse de transport.

## Revendications

1. Dispositif de cuisson horizontale avec des émetteurs infrarouges dirigés vers le bas, comportant :
- d'une part, un ensemble (4) comprenant un ou des émetteurs infrarouges (3), fixé sur un cadre en acier inoxydable (20) ; et,
- d'autre part, sur ce même cadre (20), en partie basse, un dispositif comprenant un bac à eau (10) sur lequel est posée la grille (9) destinée à supporter les denrées à griller et permettant de rapprocher ou d'éloigner les grillades suivant leur nature (viande ou poisson) par rapport aux émetteurs infrarouges;
**caractérisé en ce que** :
- les émetteurs infrarouges (3) sont des émetteurs au gaz, et
- l'ensemble (4-3) est pivotant sur un axe (19) à l'aide d'une poignée isolée (18), et
- l'ensemble pivotant est équipé d'un écran de protection anti-projection à effet capillaire (7), lequel écran est constitué d'un cadre sur lequel est fixée une toile métallique en acier inoxydable, laquelle est tissée de trous, de façon à créer un effet capillaire qui piège les projections de graisses et de sucs et sont détruits immédiatement par pyrolyse.

2. Dispositif de cuisson selon la revendication 1, **caractérisé en ce que** les trous de la toile métallique de l'écran de protection à effet capillaire (7) ont une dimension de 1 mm x 1 mm.

3. Dispositif de cuisson suivant l'une des revendications 1 ou 2, **caractérisé en ce que** ledit cadre de l'écran est introduit à l'aide de deux glissières (6) pour permettre son nettoyage.

4. Dispositif de cuisson selon l'une quelconque des revendications 1 à 3, **caractérisé en ce que** l'ensemble constitué par le bac à eau (10) sur lequel est posée la grille de cuisson (9), est mobile, de sorte à pouvoir être rapproché ou éloigné des émetteurs à infrarouges (3).

## Patentansprüche

1. Waagerechte Kochanlage mit infraroten nach unten gerichteten Sendern mit:
- einerseits der Zusammenstellung (4) infraroter Sender (3) auf einem rostfreien Rahmen (20) und :
- andererseits, auf diesem Rahmen (10) - im unteren Teil - einer Anlage mit Wasserbecken (10), auf dem das Gitter liegt (9), das dazu dient, die zu grillenden Lebensmittel zu tragen, und die es ermöglicht, jeweils der Natur nach (Fleisch oder Fisch) die Roststücke entsprechend an die infraroten Sender anzunähern oder davon zu entfernen.
Technische Daten:
- Die infraroten Sender strahlen Gas aus (3) und
- Das Gefüge (4-3) dreht sich um eine Achse (19) mit einem getrennten Griff(18), und
- Was sich dreht ist mit einem Schutzschirm versetzt, der durch Kapillareffekt (7) jede Bespritzung verhindern soll ; dieser Schutzschirm besteht aus einem Rahmen, auf dem ein rostfreies metallenes Gewebe befestigt ist, das mit Löchern gewoben ist, so dass ein Kapillareffekt entsteht, der Fett - und Saftbesprizung einfängt, Stoffe, die durch Pyrolyse sofort zerstört werden.

2. Kochanlage - nach Anspruch 1 - wird **dadurch** charakterisiert, dass die Löcher des metallenen Schutzschirmgewebes mit Kapillareffekt (7) 1mm x 1mm messen.

3. Kochanlage nach Anspruch 1 oder 2 wird **dadurch** charakterisiert, dass der besagte Schutzschirm durch 2 Schienen (6) geleitet wird, um seine Reinigung zu ermöglichen.

4. Kochanlage wird nach beliebigen Ansprüchen 1 bis 3 **dadurch** charakterisiert, dass das Gefüge Wasserbecken (10), auf dem das Grillgitter(9) liegt, beweglich ist, so dass es an die infraroten Sender (3) angenähert oder davon entfernt werden kann.

## Claims

1. Horizontal cooking device with downward-pointing infrared emitters, composed of
- A unit (4) consisting of one or more infrared emitters (3), attached to a stainless steel frame (20); and,
- On the lower part of said frame (20), a device consisting of a water basin (10) on which is placed the grill (9), which acts as a support for the food to be grilled, thus making it possible to raise or lower the food depending on its nature (meat or fish) with respect to the infrared emitters;
And **characterized by** the following:
- The infrared emitters (3) are gas emitters, and
- The unit (4-3) pivots on a pin (19) by means of an isolated knob (18), and
- The pivot unit is equipped with a capillary-effect anti-splatter protective screen (7), this screen being composed of a frame to which a stainless steel sheet is attached. This sheet contains a number of holes in order to create a capillary effect that traps grease and juice splatters, which are immediately eliminated by combustion.

2. Cooking device described in claim 1, **characterized by** the fact that the holes in the metal sheet of the capillary-effect protective screen (7) have dimensions of 1 mm x 1 mm.

3. Cooking device described in claims I or 2, **characterized by** the fact that the screen frame is inserted by means of two slides (6) in order to enable cleaning.

4. Cooking device described in claims 1, 2 or 3, **characterized by** the fact that the unit composed of the water basin (10), on which the cooking grill (9) is placed, can be moved in order to increase or decrease its distance from the infrared emitters (3).
